# EUROPEAN PATENT SPECIFICATION

(11) **EP 2 647 658 B1**
(45) Date of publication and mention of the grant of the patent: **21.10.2015**
(21) Application number: 13275087.8
(22) Date of filing: 05.04.2013
(51) Int. Cl.: C08J 3/075, A01G 27/00

(54) **Formulations for watering plants**
Formulierungen zum Wässern von Pflanzen
Formulations pour l'arrosage de plantes

(30) Priority: 05.04.2012 GB 201206183
(43) Date of publication of application: 09.10.2013
(73) Proprietor: O'Shea, Malcolm, Newton Linford, Leicestershire LE6 0AA (GB)
(72) Inventor: O'Shea, Malcolm, Newton Linford, Leicestershire LE6 0AA (GB)

(56) References cited:
- EP-A1- 1 534 061
- EP-A1- 1 769 675
- WO-A2-2009/132225
- CA-A1- 2 080 280
- DE-A1- 2 845 819

## Description

The present invention relates to formulations for watering plants, in particular to formulations containing carboxymethyl cellulose, and for plants growing in containers, such as pots and the like.

A problem associated with growing plants in pots and containers of any type is how to keep them watered and in good condition whilst on holiday or away from home. Another problem is that plants grown in pots or containers are more susceptible to damage through neglect than plants grown in the ground. People forget to water and feed plants through being too busy, or alternatively they over water, which results in waterlogging.

One approach to solving the problem is a gel comprising carboxymethyl cellulose (see CA 2080280), which is particularly suited for plants in a soil-free culture and degrades on contact with micro-organisms in the environment to release water. The gel may additionally contain nutrient materials. The ingredients are provided in the hydrated gel form, and as such the gel is prone to premature degradation before use. Biocides can be added, but these act to reduce breakdown of the gel by microbial action when in use. Supply of a dry formulation, which would be resistant to microbial breakdown when dry due to the absence of water, is therefore desirable. However, when water is added to carboxymethyl cellulose, it tends to form lumps unless a mechanical stirrer is used.

According to a first aspect of the invention there is provided a formulation for preparing a hydrogel for watering plants, the formulation comprising: carboxymethyl cellulose and a dispersant. The dispersant disperses the carboxymethyl cellulose on addition of water thereby preventing formation of aggregates.

The formulation comprises vermiculite or perlite.

According to a further aspect of the invention, there is provided a method of preparing a hydrogel for watering plants, the method comprising the steps of: providing a dry formulation comprising carboxymethyl cellulose and dispersant; adding water to the dry formulation to form a mixture; and stirring the mixture to form a hydrogel. The dispersant promotes hydrogel formation thereby preventing formation of aggregates of carboxymethyl cellulose.

The formulation comprises vermiculite or perlite.

According to a further aspect of the invention, there is provided a hydrogel for watering plants growing in a plant-supporting matrix, the hydrogel comprising carboxymethyl cellulose, a dispersant and water, wherein microorganisms in the plant-supporting matrix degrade the carboxymethyl cellulose, releasing the water.

The dispersant comprises vermiculite or perlite.

According to a further aspect of the invention, there is provided a pouch for watering plants comprising the formulation disclosed above, and wherein, when opened, water is added to the formulation to form a hydrogel and a pot containing a plant in a plant-supporting matrix is placed in the pouch.

The present invention will now be described, by way of example only, by reference to the accompanying drawings, in which:

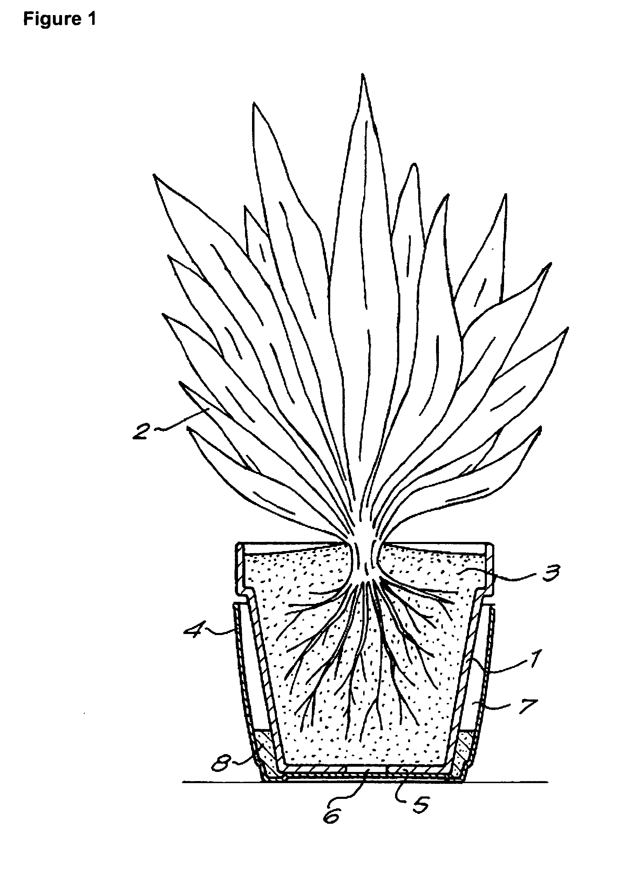

Figure 1 shows a plant growing in a plant-supporting matrix in a pot surrounded by a pouche containing a hydrogel.

The formulation for preparing a hydrogel for watering plants comprises carboxymethyl cellulose and dispersant. These ingredients can be dry mixed.

The dispersant is a material which disperses the carboxymethyl cellulose on addition of water, thereby preventing aggregation. These are particularly suitable to mix with carboxymethyl cellulose to produce a hydrogel immediately, as carboxymethyl cellulose used on its own goes into lumps and has to be mixed with a mechanical stirrer or liquidiser, which is not practical.

Dispersants are selected from vermiculite or perlite.

A formulation for preparing a hydrogel comprising carboxymethyl cellulose and vermiculite can contain 2 to 16g of carboxymethyl cellulose and 1 to 8g of vermiculite. Preferably, the formulation can contain 4 to 12g of carboxymethyl cellulose and 2 to 6g of vermiculite. This formulation is mixed with 400 ml of water to form a hydrogel. The vermiculite can be, for example, grade VO from Silvaperl (RTM).

A formulation for preparing a hydrogel comprising carboxymethyl cellulose and perlite can contain 2 to 16g of carboxymethyl cellulose and 0.5 to 3.5g of perlite. Preferably, the formulation can contain 4 to 12g of carboxymethyl cellulose and 1 to 2.5g of perlite. This formulation is mixed with 400 ml of water to form a hydrogel. The perlite can be, for example, grade P10 from Silvaperl (RTM) which is a fine grade.

Carboxymethyl cellulose is biodegradable by micro-organisms in the environment, and in particular micro-organisms in the plant-supporting matrix (soil, compost and the like) used in the pot for growing the plant. When degraded and respired, water is released.

Advantageously, the dry formulation has enhanced stability because the carboxymethyl cellulose cannot be degraded by mirco-organisms until it is hydrated.

Where the formulation comprises seaweed extract, it provides nutrient for the plant.

For use, water is added to the formulation and the mixture stirred to form a hydrogel. The amount of carboxymethyl cellulose in the hydrogel can be varied by adjusting the amount of water added to produce a hydrogel of the desired viscosity or stiffness: for a stiff hydrogel a smaller amount of water is added than for a less stiff, more runny, hydrogel. If the hydrogel is jelly-like it lasts longer than when it is runny as it just soaks straight through the compost too quickly.

Alternatively, the hydrogel comprises carboxymethyl cellulose and dispersant, to be used in any type or form of container. The gel would be made up by a producer or distributor of pot plants for stores and supermarkets, for example, for watering plants on display. Thus the producer or distributor would apply the hydrogel to a plant-supporting matrix, choosing an amount of hydrogel according to a period of time the plant is to remain on display before purchase. The amount can be in the range of 100 to 260 ml, and the period of time is in the range of 7 to 14 days. The amount to be used to produce a gel with carboxymethyl cellulose and dispersant is typically 1 litre water and 20 grams carboxymethyl cellulose which can be varied either way according to how stiff or runny the gel is required, as described previously. The amount to be used to produce a gel with carboxymethyl cellulose plus dispersant will vary according to how long the retailer requires the pot plant to last on display: typically for 7 days this might be 100 ml gel per plant, for 10 days 160ml, and for 14 days 260 ml, provided the plant is watered well first.

In order that the hydrogel can break down back into water by bacterial action, it must be in contact with the plant-supporting matrix. There are various ways to achieve this, for example, the hydrogel can be poured onto the plant-supporting material of a pot plant, or more advantageously, into a container such as a normal pot cover without holes in the bottom, sufficient in size to leave enough space around the sides for the hydrogel to ooze up around the sides of the plastic pot containing the plant without overflowing over the top of the pot cover. The hydrogel is then in contact with the compost through the holes in the bottom of the pot the plant is potted into, and so in turn gradually breaks down into water and is then taken up by the plant by normal capillary action.

The formulation can be packed into pouches, each pouch containing an amount of the formulation sufficient to be able to maintain a plant growing in a pot whilst the owner is absent or busy.

When opened water can be added to the pouch and the mixture stirred to form the hydrogel.

Figure 1 shows the opened pouch 4 arranged around a pot 1 containing plant 2 growing in a plant-supporting matrix 3. Plant-supporting matrix 3 can be for example soil, compost or other medium.

Pot 1 can be comprised of a material permeable to water, such as, for example burnt clay, or it can comprise a material impermeable to water, such as, for example, a plastic. In the latter case pot 1 has one or more holes 6 in which the plant 2 is put together with the required earth 3.

Pouch 4 comprises a material impermeable to water, such as, for example, plastic.

Pot 1 rests with its lower part 5 on the bottom 6 of pouch 4, such that a space 7 is formed between pot 1 and pouch 4.

Hydrogel 8 formed in the bottom of the opened pouch at least partially fills the space 7. The hydrogel is drawn by capillarity into the pot containing the plant-supporting matrix and the plant, whereupon the hydrogel is slowly degraded by micro-organisms present in the plant-supporting matrix, releasing water into the matrix for use by the plant.

A suitable preparation of carboxymethyl cellulose, which is 99.5% pure carboxymethyl cellulose and 0.75 up to 0.95 degree of solution, is available from CP Kelco (RTM).

A suitable preparation of seaweed extract is is Algifert K, which is available from Maxicrop UK Ltd of Corby. After drying and grinding the seaweed, it is hydrolysed to obtain Betaines from the cell walls, and plant sugars and other compounds are extracted. This extract is 100% soluble and facilitates formation of carboxymethyl cellulose hydrogel. It also has some feed value to a plant.

To prepare a litre of hydrogel, the dry formulation can contain 20g of carboxymethyl cellulose and 10g of seaweed extract, and this gives a useful hydrogel stiffness. This can be packed dry at the rate of 8 grams of carboxymethyl cellulose to a pouch plus 4 grams of seaweed extract. 400 ml of water can be poured into the pouch to produce a stiff gel. This would be suitable for a plant growing in a 10-15cm diameter pot, and would provide water for at least two weeks, depending on the temperature and other environmental factors.

To prepare a less stiff hydrogel, the dry formulation can contain 20 grams carboxymethyl cellulose to 5 grams of seaweed extract. Other variations are possible, but in general, it is better to use a stiffer mix as it lasts longer, a runny mix will just soak through the compost like watering.

Water-logging is thus prevented by use of the CMC and dispersant as a normal method of watering; instead of watering every few days the plants only need watering every two to three weeks using the gel, which can be replenished as needed.

## Claims

1. A formulation for preparing a hydrogel for watering plants, the formulation comprising:
carboxymethyl cellulose and vermiculite or perlite, wherein the vermiculite or perlite disperses the carboxymethyl cellulose on addition of water thereby preventing formation of aggregates.

2. A method for preparing a hydrogel for watering plants, the method comprising the steps of:
providing the formulation according to claim 1 in a dry form, the formulation comprising carboxymethyl cellulose and vermiculite or perlite;
adding water to the dry formulation to form a mixture;
stirring the mixture to form a hydrogel;
wherein the vermiculite or perlite prevents formation of aggregates of carboxymethyl cellulose, thereby promoting hydrogel formation.

3. A pouch for watering plants comprising the formulation according to claim 1, and wherein, when opened, water is added to the formulation to form a hydrogel and a pot containing a plant in a plant-supporting matrix is placed in the pouch.

4. A hydrogel for watering plants growing in a plant-supporting matrix, the hydrogel comprising carboxymethyl cellulose and water, wherein microorganisms in the plant-supporting matrix degrade the carboxymethyl cellulose, releasing the water, and wherein the hydrogel additionally comprises vermiculite or perlite.

5. A method for watering plants on display comprising the steps of:
providing a plant growing in a plant-supporting matrix in a pot;
applying the hydrogel according to claim 4 to the plant-supporting matrix;
wherein an amount of the hydrogel is chosen according to a period of time the plant is to remain on display.

6. A method according to claim 5, in which the amount is in the range of 100 to 260 ml, and the period of time is in the range of 7 to 14 days.

## Patentansprüche

1. Eine Formulierung zur Herstellung eines Hydrogels zum Bewässern von Pflanzen, wobei die Formulierung Folgendes umfasst: Carboxymethylcellulose und Vermiculit oder Perlit, worin Vermiculit oder Perlit die Carboxymethylcellulose bei Wasserzugabe dispergiert und dabei die Bildung von Aggregaten verhindert.

2. Eine Methode zur Herstellung eines Hydrogels zum Bewässern von Pflanzen, wobei die Methode die folgenden Schritte umfasst:
Bereitstellung der Formulierung gemäß Aussage 1 in Trockenform, wobei die Formulierung Carboxymethylcellulose und Vermiculit oder Perlit umfasst;
Zugabe von Wasser zur Trockenformulierung zur Bildung einer Mixtur;
Rühren der Mixtur zur Bildung eines Hydrogels,
worin das Vermiculit oder Perlit die Bildung von Aggregaten der Carboxymethylcellulose verhindert und damit die Hydrogelbildung fördert.

3. Ein Beutel zum Bewässern der Pflanzen, der die Formulierung gemäß Aussage 1 enthält, und in den nach dem Öffnen Wasser zur Formulierung zur Bildung eines Hydrogels gegeben wird, woraufhin ein Topf mit einer Pflanze in einer Pflanzen-Matrix in den Beutel kommt.

4. Ein Hydrogel zum Bewässern der Pflanzen, die in einer Pflanzen-Matrix herangezogen werden, wobei das Hydrogel Carboxymethylcellulose und Wasser umfasst, worin Mikroorganismen in der Pflanzenmatrix die Carboxymethylcellulose abbauen, was das Wasser freisetzt, wobei das Hydrogel auch Vermiculit oder Perlit enthält.

5. Eine Methode zum Bewässern der ausgestellten Pflanzen, die die folgenden Schritte umfasst:
Bereitstellung einer Pflanze, die in einem Topf in einer Pflanzen-Matrix herangezogen wird;
Beigabe des Hydrogels gemäß Aussage 4 zur Pflanzen-Matrix;
dazu wird die Menge des Hydrogels je nach der Zeitdauer gewählt, während der die Pflanze ausgestellt ist.

6. Eine Methode gemäß Aussage 5, bei der die Menge bei 100 bis 260 ml und die Zeitdauer zwischen 7 und 14 Tagen liegt.

## Revendications

1. Une formulation pour préparer un hydrogel destiné à irriguer les plantes, ladite formulation étant composée de carboxyméthylcellulose sodique et de vermiculite ou de perlite, dans laquelle la vermiculite ou la perlite disperse la carboxyméthylcellulose sodique lorsque l'eau est ajoutée, empêchant ainsi la formation d'agrégats.

2. Une méthode pour préparer un hydrogel d'irrigation des plantes, ladite méthode se composant des étapes suivantes :
fournir sous forme sèche la formulation de la revendication 1, la formulation étant composée de carboxyméthylcellulose sodique et de vermiculite ou de perlite ;
ajouter l'eau à la formulation sèche pour former un mélange ;
remuer le mélange pour former un hydrogel ;
dans lequel la vermiculite ou la perlite empêche la formation d'aggrégats de carboxyméthylcellulose, assurant ainsi la formation de l'hydrogel.

3. Un sac d'irrigation des plantes contenant la formulation de la revendication 1, et dans lequel, quand il est ouvert, l'eau est ajoutée à la formulation pour former un hydrogel, et un pot contenant une plante poussant dans un substrat est placé dans le sac.

4. Un hydrogel d'irrigation des plantes poussant dans un substrat, l'hydrogel étant composé de carboxyméthylcellulose et d'eau, où des microorganismes situés dans le substrat dégradent la carboxyméthylcellulose, relâchant l'eau, et où l'hydrogel est composé en plus de vermiculite ou de perlite.

5. Une méthode pour irriguer les plantes exposées se composant des étapes suivantes :
prendre une plante poussant dans un substrat dans un pot ;
déposer l'hydrogel de la revendication 4 dans le substrat :
où une quantité d'hydrogel est déterminée en fonction de la période de temps pendant laquelle la plante doit rester exposée.

6. Une méthode selon la revendication 5, où la quantité est de l'ordre de 100 à 260 ml, et la période de temps va de 7 à 14 jours.
